(19) Europäisches Patentamt
European Patent Office
Office européen des brevets

(11) Veröffentlichungsnummer : **0 389 567 B1**

# (12) EUROPÄISCHE PATENTSCHRIFT

(45) Veröffentlichungstag der Patentschrift :
**30.10.91 Patentblatt 91/44**

(51) Int. Cl.⁵ : **B60K 23/04**

(21) Anmeldenummer : **89901859.2**

(22) Anmeldetag : **01.02.89**

(86) Internationale Anmeldenummer :
**PCT/EP89/00080**

(87) Internationale Veröffentlichungsnummer :
**WO 89/07058 10.08.89 Gazette 89/18**

(54) FAHRZEUG MIT EINER ANGETRIEBENEN LENKACHSE.

(30) Priorität : **08.02.88 DE 3803707**

(43) Veröffentlichungstag der Anmeldung :
**03.10.90 Patentblatt 90/40**

(45) Bekanntmachung des Hinweises auf die
Patenterteilung :
**30.10.91 Patentblatt 91/44**

(84) Benannte Vertragsstaaten :
**AT BE DE FR GB IT SE**

(56) Entgegenhaltungen :
**WO-A-86/01467**
**DE-A- 2 015 513**
**DE-A- 3 440 492**
**DE-C- 931 633**
**GB-A- 206 875**
**US-A- 4 162 712**

(56) Entgegenhaltungen :
**Technical Digest - Western Electric, Nr. 27, Juli 1972, (New York, USSSSSS) R.M. Lumley: "apparatus for measuring rotational speed and linear displacement of a rotating shaft", pages 31, 32**
**Patent Abstracts of Japan, Band 10, Nr. 295 (M-523)(2351) 7. Oktober 1986 & JP-A-61109939 AISIN WARNER LTD) 28. Mai 1986**

(73) Patentinhaber : **ZAHNRADFABRIK FRIEDRICHSHAFEN AKTIENGESELLSCHAFT Löwentaler Strasse 100 Postfach 2520 W-7990 Friedrichshafen 1 (DE)**

(72) Erfinder : **PAUL, Michael Emerenz-Meier-Strasse 14 W-8390 Passau (DE)**
Erfinder : **WILKS, Eberhard Grossthannensteig 31 W-8391 Hutthurm (DE)**
Erfinder : **SIGL, Peter Wolfingerstrasse 2 W-8398 Pocking (DE)**

EP 0 389 567 B1

# Beschreibung

Die Erfindung betrifft ein Fahrzeug mit einer angetriebenen Lenkachse und einer Differentialsperre, die abhängig vom Lenkwinkel betätigt wird, wobei ein Signalerzeuger für den Lenkwinkel ein mit einer Abtriebswelle rotierendes Geberteil, das während der Lenkbewegung abhängig vom Lenkwinkel seine Lage relativ zum Achsgehäuse verändert und ein am Achsgehäuse befestigtes Nehmerteil aufweist.

Bei Fahrzeugen der eingangs genannten Art dient das Differential dazu, daß die Räder bei Kurvenfahrt unterschiedliche Drehzahlen annehmen können, ohne auf dem Untergrund zu rutschen und die Fahrstabilität des Fahrzeugs zu beeinträchtigen. Um bei ungleichmäßigen Haftbedingungen an den einzelnen Rädern die Traktion zu verbessern, werden Differentialsperren vorgesehen.

Aus der internationalen Anmeldung WO 86/01467 ist ein Fahrzeug mit einer angetriebenen Lenkachse und einer Differentialsperre bekannt geworden. Die Differentialsperre wird abhängig vom Lenkwinkel betätigt. Bei einer Ausführungsform weist ein Signalerzeuger für den Lenkwinkel ein Geberteil auf, das mit der Abtriebswelle rotiert und während der Lenkbewegung in Abhängigkeit vom Lenkwinkel seine Lage relativ zum Achsgehäuse verändert. Ein Nehmerteil des Signalerzeugers ist am Achsgehäuse befestigt. Bei der bekannten Konstruktion ist nachteilig, daß lediglich lenkwinkelabhängige Signale erzeugt werden.

Der Erfindung liegt die Aufgabe zugrunde, die Betätigung einer Differentialsperre in der Weise zu verbessern, daß sowohl drehzahl- als auch lageabhängige Signale berücksichtigt werden, wobei die Anzahl der Sensoren und damit der Bauaufwand für die Betätigung der Differentialsperre gering sein soll.

Das der Erfindung zugrunde liegende Problem wird dadurch gelöst, daß das Nehmerteil ein berührungslos wirkender Impulsgeber ist und das Geberteil eine Oberflächenstruktur aufweist, die in dem Impulsgeber eine Impulsfolge erzeugt, deren Frequenz ein Meßsignal für die Drehzahl bildet. Ferner ist die Oberflächenstruktur derart beschaffen, daß sich ihr Impulsbreiten- oder Tastverhältnis mit der axialen Verschiebung des Nehmerteils ändert, womit ein Meßsignal gebildet wird, das sich mit dem Lenkwinkel ändert. Ein wesentlicher Vorteil der erfindungsgemäßen Lösung besteht somit darin, daß ein einziger Signalerzeuger genügt, um drehzahl- und lageabhängige Signale zu liefern.

Zweckmäßigerweise werden elektrisch, magnetisch oder optisch wirkende Signalerzeuger verwendet, die angenähert Rechteckimpulse mit einem Hoch- und Niedriganteil erzeugen. Bei gleichbleibender Drehzahl der Abtriebswelle soll unabhängig von der Lage des Geberteils zum Nehmerteil die Frequenz konstant bleiben, während in Abhängigkeit von der relativen Lage zueinander das Verhältnis von Hoch- zu Niedriganteil sich ändert. Für die Drehzahlfassung ist es möglich, den Abstand zwischen zwei aufeinanderfolgende ansteigende oder abfallende Impulsflanken pro Zeiteinheit zu messen. Der Lenkwinkel kann aus dem Verhältnis von Hochzu Niedriganteil ermittelt werden. Grundsätzlich ist es möglich, jedem Lenkwinkel ein bestimmtes Verhältnis von Hoch- zu Niedriganteil zuzuordnen, wobei sich das Verhältnis kontinuierlich über den Verschiebebereich des Geberteils ändert. In manchen Anwendungsfällen kann es genügen, daß ein oder mehrere Winkel in die Regelung für die Differentialsperre einfließen, so daß eine entsprechende diskontinuierliche linderung des Verhältnisses von Hoch- zu Niedriganteil vorgesehen werden kann.

Eine vorteilhafte Ausgestaltung des Geberteils besteht darin, daß dieses als verzahnter Ring ausgeführt ist, dessen Zahnbreite sich in axialer Richtung kontinuierlich oder diskontinuierlich ändert.

In der Zeichnung sind Ausführungsbeispiele der Erfindung dargestellt:

Fig. 1 zeigt einen Signalerzeuger mit einer kontinuierlichen Veränderung des Verhältnisses von Hoch- zu Niedriganteil der Rechteckimpulse;

Fig. 2 zeigt eine diskontinuierliche Veränderung;

Fig. 3 zeigt ein Diagramm von Rechteckimpulsen für verschiedene Lagen des Geberteils nach Fig. 1.

Ein erfindungsgemäßer Signalerzeuger besteht aus einem Geberteil 1, das fest mit einem Antriebswellenteil 2 verbunden ist, und einem Nehmerteil 3, das berührungsfrei mit dem Geberteil 1 zusammenwirkt und in einem Achsgehäuse 4 angeordnet ist.

Während der Lenkbewegung des Fahrzeugs bewegt sich das Antriebswellenteil 2 in axialer Richtung entsprechend dem Pfeil 5 hin und her, wobei das Fahrzeug geradeaus fährt, wenn das Geberteil mit der Position $\alpha_0$ über dem Zentrum 6 des Nehmerteils steht, und der maximale Lenkeinschlag erreicht wird, wenn das Nehmerteil 3 mit der Position $\alpha_M$ über dem Zentrum des Nehmerteils steht. Das Nehmerteil 3 kann elektrisch, magnetisch oder optisch wirken. Entsprechend weist das Geberteil 1 am Umfang elektrisch, magnetisch oder optisch wirksame Bereiche 7 auf, die mit Bereichen 8 bedeuten.d geringerer Wirksamkeit abwechseln, und die im Nehmerteil 3 den Hochanteil 9 von Rechteckimpulsen erzeugt. Hochanteil 9 und Niedriganteil 10 bilden zusammen einen Rechteckimpuls. Dabei wird zweckmäßigerweise die Sequenz der ansteigenden Flanken 11 oder der abfallenden Flanken 12 für die Drehzahlmessung ausgewertet, währer-d das Verhältnis von Hochanteil 9 zu Niedriganteil 10 ein Maß für den jeweiligen Lenkwinkel darstellt.

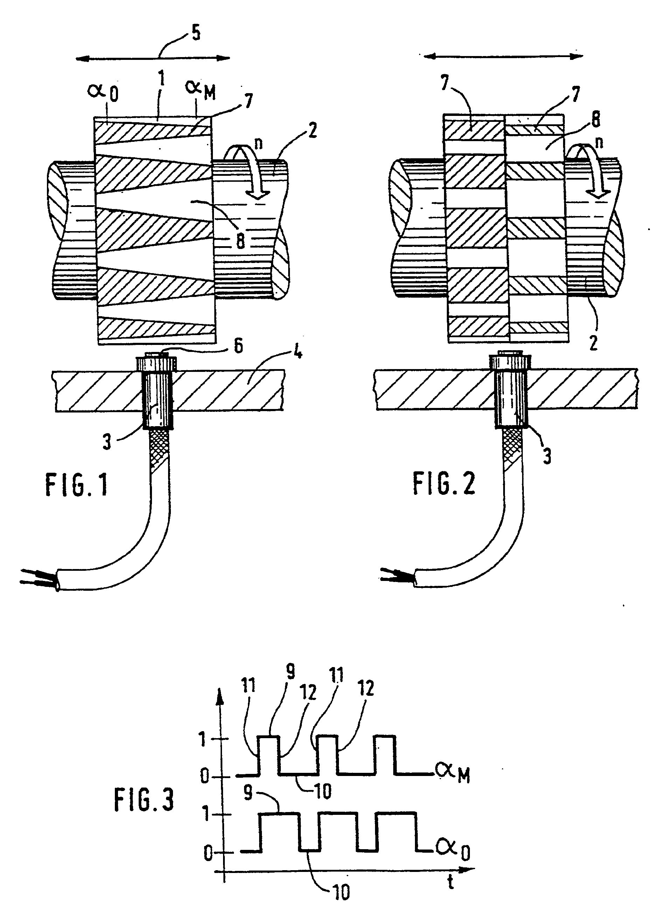

Während die wirksamen Flächen 7 nach Fig. 1 von der Position $\alpha_0$ zu Position $\alpha_M$ kontinuierlich

schmaler werden und entsprechend die Breite der weniger wirksamen Flächen 8 sich kontinuierlich vergrößert, bleiben die wirksammen Flächen 7 bei der Ausführung nach Fig. 2 über einen größeren Bereich konstant und verändern ihre Breite sprunghaft ab einem bestimmten Lenkwinkel.

**Patentansprüche**

1. Fahrzeug mit einer angetriebenen Lenkachse und einer Differentialsperre, die abhängig vom Lenkwinkel betätigt wird, wobei ein Signalerzeuger für den Lenkwinkel ein mit einer Abtriebswelle (2) rotierendes Geberteil (I), das während der Lenkbewegung abhängig vom Lenkwinkel seine Lage relativ zum Achsgehäuse (4) verändert und ein am Achsgehäuse (4) befestigtes Nehmerteil (3) aufweist, dadurch **gekennzeichnet**, daß das Nehmerteil (3) ein berührungslos wirkender Impulsgeber ist und das Geberteil (1) eine Oberflächenstruktur aufweist, die in dem Impulsgeber eine Impulsfolge erzeugt, deren Frequenz ein Meßsignal für die Drehzahl bildet und deren Impulsbreiten- oder Tastverhältnis sich mit der axialen Verschiebung des Nehmerteils (3) ändert und damit ein sich mit dem Lenkwinkel änderndes Meßsignal bildet.

2. Fahrzeug nach Anspruch 1, dadurch **gekennzeichnet**, daß elektrisch, magnetisch oder optisch wirkende Signalerzeuger verwendet werden, die angenähert Rechteckimpulse mit einem Hoch- (9) und Niedriganteil (10) erzeugen, deren Frequenz über den Verschiebebereich des Geberteils (1) konstant ist und deren Verhältnis von Hochanteil (9) zu Niedriganteil (10) sich über den Verschiebebereich des Geberteils (1) ändert.

3. Fahrzeug nach Ansprüch 1 oder 2, dadurch **gekennzeichnet**, daß das Geberteil (I) ein verzahnter Ring ist, dessen Zahnbreite sich in axialer Richtung kontinuierlich oder diskontinuierlich ändert.

**Claims**

1. Vehicle with a driven steering axle and a differential pawl, which is actuated independently of the steering angle, a signal generator for the steering angle having a transmitter part (1) which rotates with a drive shaft (2) and changes its position relative to the axle housing (4) during the steering motion independently of the steering angle, and having a receiver part (3) fixed to the axle housing, **characterised** in that the receiver part (3) is a pulse emitter acting in a contactless manner and the transmitter part (1) has a surface structure which generates in the pulse emitter a pulse sequence, whose freqency forms a measuring signal for the r.p.m. and whose pulse width or mark-space ratio changes with the axial displacement of the receiver part (3) and thus forms a measuring signal which changes with the steering angle.

2. Vehicle according to claim 1, **characterised** in that electrically, magnetically or optically operating signal emitters are used, which generate approximately rectangular pulses with a high (9) and low (10) component, whose frequency is constant over the displacement range of the transmitter part (1) and whose ratio of high component (9) to low component (10) changes over the displacement range of the transmitter part (1).

3. Vehicle according to claim 1 or 2, **characterised** in that the transmitter part (1) is a toothed ring, whose tooth width changes continuously for discontinuously in the axial direction.

**Revendications**

1. Véhicule ayant un essieu directeur moteur et un blocage de différentiel qui est actionné en fonction de l'angle de braquage, dans lequel un capteur d'angle de braquage comporte un élément d'entrée (1) qui tourne avec un arbre d'entraînement (2) et qui, pendant le mouvement de braquage, change de position par rapport au carter d'essieu (4), et un élément de sortie (3) fixé au carter d'essieu (4), caractérisé en ce que l'élément de sortie (3) est un émetteur d'impulsions fonctionnant sans contact et l'élément d'entrée (1) comporte une structure superficielle qui produit, dans l'émetteur d'impulsions, une séquence d'impulsions dont la fréquence constitue un signal de mesure de la vitesse de rotation et dont la largeur d'impulsions ou l'efficacité impulsionnelle varie avec le décalage axial de l'élément de sortie (3) et constitue ainsi un signal de mesure qui varie avec l'angle de braquage.

2. Véhicule selon la revendication 1, caractérisé en ce qu'il utilise des générateurs électriques, magnétiques ou optiques de signaux, produisant des impulsions approximativement rectangulaires présentant une partie haute (9) et une partie basse (10), dont la fréquence est constante dans la plaque de déplacement de l'élément d'entrée (1) et où le rapport entre la partie haute (9) et la partie basse (10) varie dans la plage de déplacement de l'élément d'entrée (1).

3. Véhicule selon la revendication 1 ou 2, caractérisé en ce que l'élément d'entrée (1) est un anneau denté dont la largeur de dents varie en direction axiale, de manière continue ou discontinue.

FIG.1

FIG.2

FIG.3